# FASCICULE DE BREVET EUROPEEN

(11) **EP 1 532 428 B1**
(45) Date de publication et mention de la délivrance du brevet: **11.06.2008**
(21) Numéro de dépôt: 03760040.0
(22) Date de dépôt: 13.06.2003
(51) Int. Cl.: G01K 13/02

(54) **CAPTEUR DEGIVRE DE TEMPERATURE TOTALE D AIR**
FROSTFREIER TOTALTEMPERATURSENSOR FÜR LUFT
DE-ICED TOTAL AIR TEMPERATURE SENSOR

(30) Priorité: 14.06.2002 FR 0207362
(43) Date de publication de la demande: 25.05.2005
(73) Titulaire: Auxitrol SA, 18000 Bourges (FR)
(72) Inventeur: BERNARD, Marc, F-18000 Bourges (FR); BARRE, Cyril, F-36100 Issoudun (FR); LAPEYRONNIE, David, F-18340 Levet (FR)
(74) Mandataire: Callon de Lamarck, Jean-Robert
(86) Numéro de dépôt international: PCT/FR2003/001808
(87) Numéro de publication internationale: WO 2003/106949

(56) Documents cités:
- WO-A-01/44821
- WO-A-01/88496
- WO-A-95/08101

## Description

### DOMAINE GENERAL

La présente invention est relative à un capteur pour la mesure d'au moins un paramètre physique sur un flux de fluide et notamment à un capteur dégivré de température totale d'air.

Elle trouve en particulier avantageusement application dans le domaine de l'aéronautique pour la mesure de température totale d'air en entrée de moteurs et/ou à l'extérieur des aéronefs.

### ETAT DE LA TECHNIQUE

De nombreux capteurs de température totale d'air dégivrés sont déjà connus.

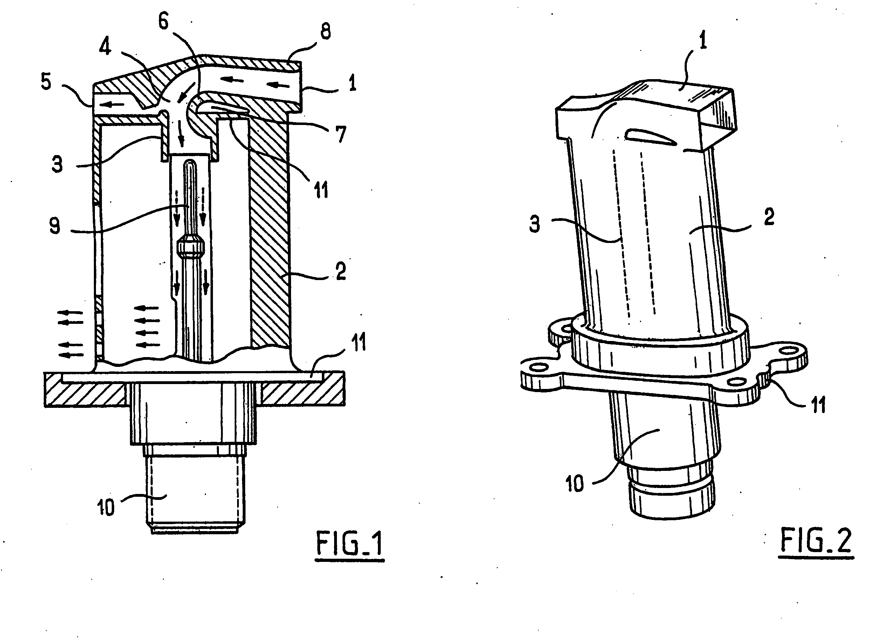

Ils comportent classiquement, ainsi que l'illustrent les figures 1 et 2, une prise d'air 1 rapportée sur un corps profilé 2 ayant un profil du type en aile d'avion.

Un conduit 3 est ménagé dans le corps profilé 2 et permet l'écoulement du fluide sur lequel un paramètre physique doit être mesuré en étant en communication avec la prise d'air 1 par l'intermédiaire d'une zone de séparation inertielle 4.

Cette zone 4 permet de séparer par centrifugation les éléments de masse importante (liquide, givre, sable,...) par rapport au reste du gaz, ces éléments étant évacués du capteur par une zone d'éjection 5 opposée à la prise d'air 1.

Afin d'éviter les phénomènes de décollement du fluide dans la zone de séparation inertielle, des trous 6 sont ménagés dans la paroi de celle-ci, du côté opposé à la zone d'éjection 5, et communiquent avec l'extérieur par l'intermédiaire d'une chambre 7 qui s'étend transversalement par rapport au corps profilé 2.

Le différentiel de pression existant entre l'intérieur et l'extérieur du capteur permet l'aspiration de la couche limite par les trous 6.

L'ensemble de la prise d'air 1, du corps profilé 2, du conduit 3, de la zone de séparation inertielle 4 et de la zone d'éjection 5 est dégivré électriquement par les résistances chauffantes positionnées dans des rainures 8 ménagées dans des parois de la sonde.

Un élément 9 formant sonde de mesure s'étend à l'intérieur du conduit 3.

Cet élément 9 est par exemple une résistance thermométrique, isolée thermiquement du corps profilé 2.

Le corps profilé 2, également appelé « mât », est rapporté sur une bride de fixation 11 qui a une forme générale plane (par exemple un disque), qui s'étend perpendiculairement à l'axe du corps 2 et du conduit 3.

Une embase de connexion 10 est rapportée sur cette bride de fixation 11 du côté de celle-ci opposé au corps profilé 2.

Il peut également être prévu que le corps profilé soit monté sur une palette mobile destinée à s'orienter dans l'axe de l'écoulement d'air.

Une structure en ce sens est notamment décrite dans la demande de brevet WO 01/44821 qui décrit une sonde multifonctions intégrant une mesure de température totale d'air montée sur une palette mobile en s'y étendant avec un axe longitudinal incliné dans le flux de fluide.

Généralement, ainsi que l'illustre la figure 2, la prise d'air 1 est de section intérieure rectangulaire et il en est de même, au moins sur une certaine portion, du conduit 3 qui se raccorde à la prise d'air 1.

Il a été récemment proposé par la Demanderesse, notamment dans sa demande WO 01/88 496, une structure de capteur dans laquelle la prise d'air est de section au moins partiellement circulaire ou elliptique.

Il a en effet été montré qu'une telle forme permettait de tenir des conditions de givrage plus sévères qu'avec les capteurs dont les sections de prises d'air sont rectangulaires.

### PRESENTATION DE L'INVENTION

Un but général de l'invention est de proposer un capteur présentant un comportement encore amélioré en conditions givrantes et ce sans dégrader les performances de mesure en conditions sèches.

Notamment, l'invention concerne un capteur comportant une prise de fluide rapportée sur un corps profilé, un conduit aménagé dans ledit corps profilé pour permettre l'écoulement du fluide, ledit conduit communiquant avec ladite prise de fluide et un élément sensible disposé à l'intérieur dudit conduit.

L'invention propose notamment une structure de prise d'air qui permet une vitesse de dégivrage encore améliorée et permet de pallier les inconvénients des prises d'air classiquement connues pour ce type de sonde.

On rencontre en effet avec les sondes de l'art antérieur des difficultés à éliminer certains blocs de glace qui viennent se bloquer sur la section d'entrée de la prise d'air. Il arrive en effet que dans certains cas le seul système de chauffage soit insuffisant pour désengager rapidement la prise d'air.

L'invention propose quant à elle un capteur de mesure de paramètre(s) physique(s) notamment la température totale de l'air sur un fluide, tel que défini dans la revendication 1.

Par ailleurs, l'invention propose une solution permettant de pallier aux inconvénients que peuvent présenter les moyens d'aspiration de couche limite que constituent les trous 6, pour les structures du type de celles illustrées sur les figures 1 et 2.

De tels moyens d'aspiration présentent en effet un faible rendement impliquant un nombre de trous important; ils impliquent des tolérances de fabrication serrées pour assurer la répétabilité des performances ; ils sont en outre à l'origine d'une sensibilité angulaire importante de la sonde détériorant les performances de mesure lorsque la sonde est en incidence.

L'invention propose un capteur dont les moyens d'aspiration ne présentent pas ces inconvénients.

Selon un mode de réalisation, la prise de fluide du capteur de mesure de paramètre(s) physique(s) présente une section intérieure définie par au moins une surface plane qui communique avec une chambre débouchant à l'extérieur et qui constitue une chambre d'aspiration de couche limite, ladite surface plane présentant à cet effet une pluralité de rainures d'aspiration s'étendant transversalement par rapport à la direction générale d'écoulement du flux dans la prise de fluide.

Egalement encore, l'invention propose des perfectionnements relatifs à l'élément sensible. Classiquement en effet, l'élément sensible, composé d'un fil résistif bobiné entre deux tubes métalliques dont il est électriquement isolé, est positionné à l'intérieur du capteur grâce à un support métallique creux. Ce support métallique est assemblé avec le corps métallique du capteur par soudure. Il en résulte que la chaleur dissipée dans le corps de sonde est transmise à l'élément sensible par conduction.

Pour limiter ces effets, on utilise habituellement des plots de maintien entre le support métallique et l'élément sensible.

Des structures à plots de maintien présentent toutefois de nombreux inconvénients :
- assemblage complexe,
- mauvaise tenue en fatigue des plots de maintien conduisant à une rupture de l'élément de mesure,
- isolement électrique limité par l'utilisation de matériaux métalliques.

L'invention propose une structure qui permet de pallier à ces inconvénients par l'utilisation d'une céramique isolante thermiquement pour le mandrin support et permettant d'assurer une tenue mécanique et un découplage thermique améliorés.

Selon un autre mode de réalisation l'élément sensible du capteur de mesure de paramètre(s) physique(s) comporte un tube céramique sur lequel est bobiné un fil résistif de mesure.

### PRESENTATION DES FIGURES

D'autres caractéristiques et avantages de l'invention ressortiront encore de la description qui suit, laquelle est illustrative et non limitative et doit être lue en regard des dessins annexés sur lesquels :
- les figures 1 et 2, déjà discutées, sont des représentations schématiques en coupe et en perspective d'un capteur dégivré de mesure de température d'air totale conforme à un état de la technique connu ;
- la figure 3 est une représentation en vue en coupe illustrant un mode de réalisation possible de l'invention ;
- la figure 4 est une représentation en vue de côté du mode de réalisation illustré sur la figure 3 ;
- la figure 5 et la figure 6 sont des représentations en perspective illustrant deux exemples de forme de prise d'air ;
- la figure 7 est une représentation schématique en vue de dessus de la paroi inférieure de la prise d'air et des moyens d'aspiration de couche limite qu'elle comporte ;
- les figures 8a et 8b illustrent l'écoulement du fluide, d'une part, dans le cas de moyens d'aspiration du type de ceux connus dans l'état de la technique et, d'autre part, dans le cas de moyens d'aspiration du type de ceux illustrés sur la figure 7 ;
- les figures 9a et 9b sont, l'une, une représentation définissant l'incidence prise par le capteur par rapport à la direction d'écoulement, et l'autre, l'évolution de l'erreur sur la mesure réalisée en fonction de l'angle d'incidence, d'une part pour un capteur conforme à l'état de la technique et, d'autre part, pour un capteur du type de celui illustré sur les figures 5 à 7 ;
- les figures 10a et 10b sont des représentations schématiques en coupe qui illustrent l'écoulement du fluide dans l'épaisseur de la paroi inférieure, d'une part dans le cas de moyens d'aspiration à trous (figure 10a) et, d'autre part, dans le cas d'un mode de réalisation avantageux de l'invention (figure 10b) ;
- la figure 12 est une représentation en vue de dessus similaire à celle de la figure 7, illustrant un autre mode de réalisation possible ;
- les figures 13a et 13b illustrent deux modes de réalisation possibles pour la surface de glissement définie par la section d'entrée de la prise de fluide ;
- la figure 14 est une représentation schématique en coupe transversale de la prise d'air ;
- la figure 15 est une représentation en perspective d'un capteur conforme à un mode de réalisation possible de l'invention, cette vue en perspective faisant apparaître une forme possible pour la section d'éjection du capteur.
- la figure 16 est une représentation schématique en vue de côté de l'élément sensible.

### DESCRIPTION D'UN OU PLUSIEURS MODES DE REALISATION DE L'INVENTION

### Structure générale

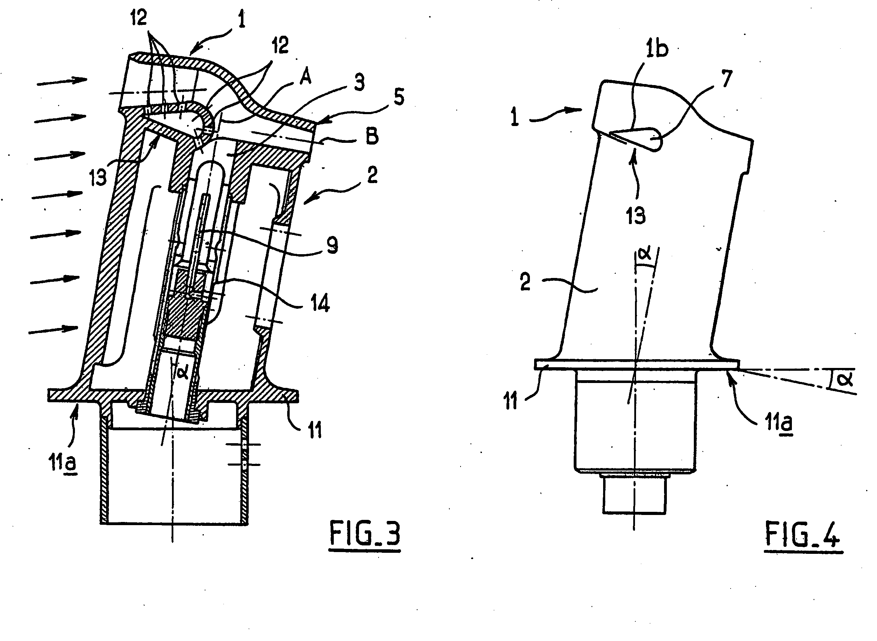

Les capteurs illustrés sur les figures 3 et suivantes comportent une prise d'air 1 supportée par un corps profilé ou « mât » 2 et débouchant dans un conduit 3 qui s'étend dans ledit mât 2, ce conduit 3 recevant un élément sensible 9.

Le corps profilé ou « mât » 2 s'étend à partir d'une bride de fixation 11.

Cette bride présente notamment une portée 11a qui est destinée à venir en appui sur la pièce (portion de fuselage, par exemple) sur laquelle le capteur est destiné à être fixé, la surface de cette portée définissant un plan de fixation pour le capteur.

### Inclinaison et forme de la section d'entrée

On rappelle que classiquement, la section supportant la prise d'air de la sonde est perpendiculaire à l'écoulement.

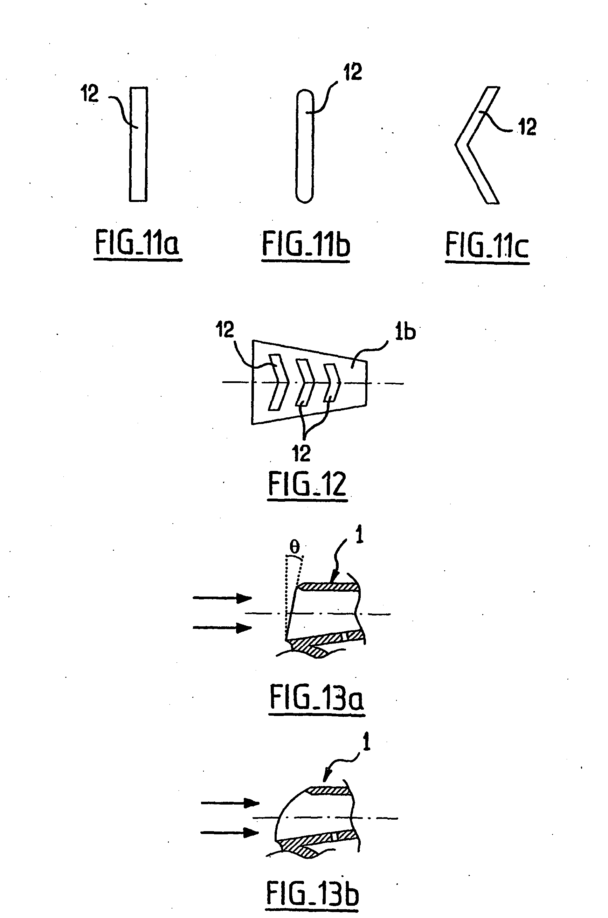

Ainsi que l'illustre la figure 13a, il est proposé que la section d'entrée de la prise d'air soit inclinée par rapport à la section orthogonale de l'écoulement (angle θ).

L'inclinaison est du bord inférieur de la prise vers l'aval (l'arrière), de sorte que la section d'entrée de la prise d'air constitue une surface de glissement pour les glaçons qui viendraient se bloquer sur cette prise d'air.

De tels glaçons en effet sont amenés à glisser le long de cette surface et à s'en désengager, ladite surface étant par ailleurs chauffée par le système de dégivrage.

Avec une telle structure à section d'entrée inclinée, la vitesse de dégivrage est améliorée jusqu'à 50 % (cas d'un angle θ compris entre 5° et 45°). L'angle θ est notamment préférentiellement égal à 10°.

En variante encore et ainsi que l'illustre la figure 13b, la section d'entrée qui forme surface de glissement pour la glace peut être arrondie (concave ou convexe).

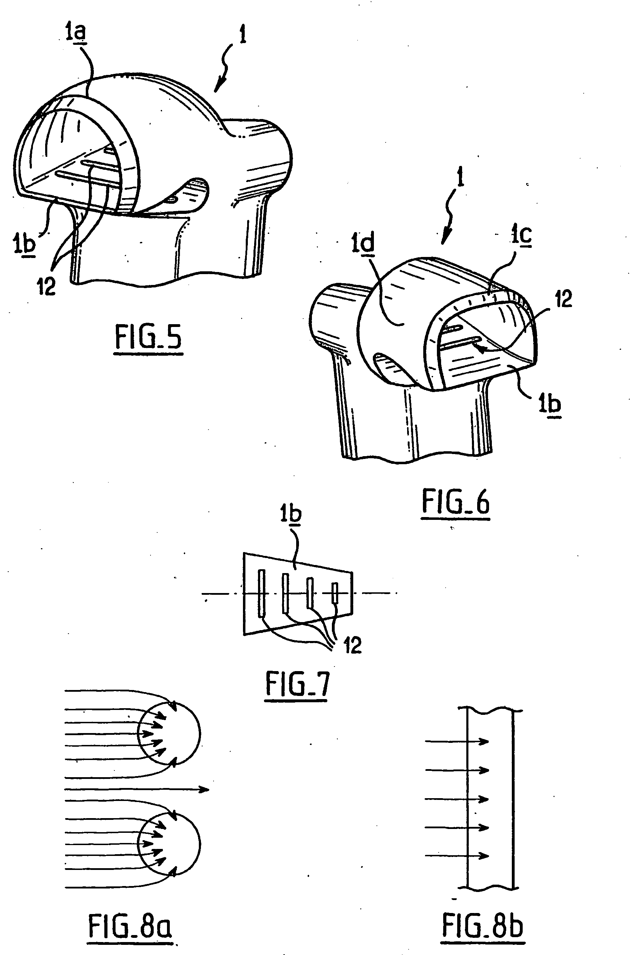

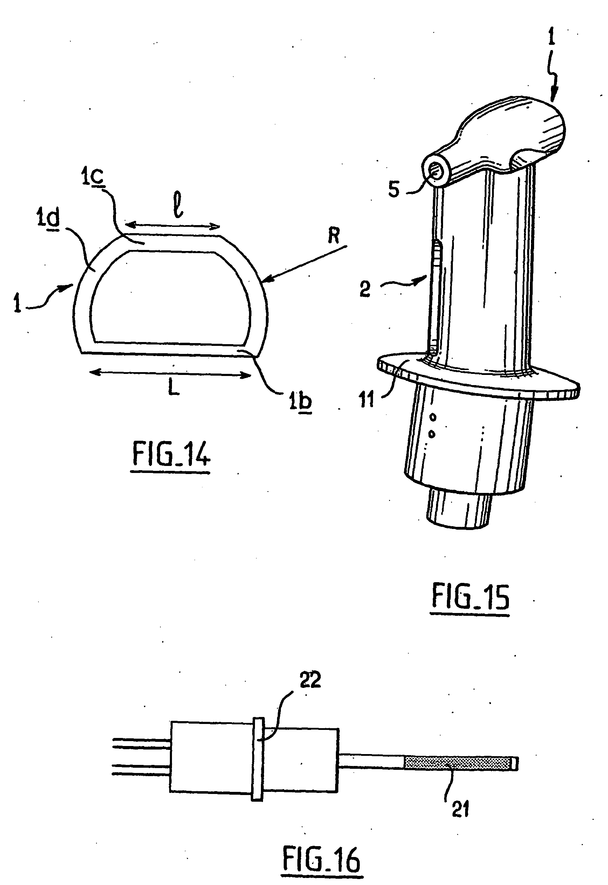

Pour optimiser à la fois la vitesse de dégivrage et le rendement des rainures d'aspiration, la forme de la prise d'air est préférentiellement du type illustré sur la figure 6 ainsi que sur la figure 14.

Comme on le voit sur ces figures, elle comprend deux côtés plans et parallèles entre eux, de longueurs différentes dans la section droite de la prise d'air. Ses côtés sont reliés entre eux par deux côtés de forme arrondie.

Le côté qui définit le plan inférieur 1b et qui porte les rainures d'aspiration 12 est par exemple d'une longueur (double flèche, grand « L » sur la figure 14) comprise entre 15 et 25 mm, le deuxième côté est quant à lui d'une longueur (double flèche, petit « L » sur la figure 13) comprise entre 5 et 15 mm.

Les deux autres côtés arrondis permettent de réduire la surface interne exposée au givre. Leur rayon de courbure (R) est compris entre 5 et 15 mm.

On notera également que tous les angles entre les différents côtés de la section droite de la prise d'air sont tous supérieurs à 90°, ce qui permet de limiter les zones mortes et d'avoir une répartition homogène des fluides.

Ainsi qu'illustrent plus particulièrement les figures 5 et 6, la prise d'air 1 a avantageusement une forme au moins partiellement arrondie.

Dans le cas illustré sur la figure 5, cette prise d'air 1 est définie par une portion haute 1a de forme intérieure sensiblement cylindrique, ainsi que par une paroi inférieure 1b de forme plane, qui s'étend entre le bord d'ouverture de la prise d'air 1 et la zone inertielle 4, les termes « *haute »* et *« inférieure* » devant être ici compris par rapport à l'axe principal du corps 2, considéré de la bride de fixation 11 vers la prise d'air. Quant au conduit 3, il présente également, au moins sur une partie, une forme arrondie.

L'utilisation de formes arrondies pour la prise d'air 1 et/ou le conduit 3 a l'avantage de permettre de réduire la surface intérieure du capteur sur laquelle le givre est susceptible de se déposer, de supprimer les zones de changement de section de passage de l'air ou du fluide à mesurer, d'éliminer les zones mortes générées dans les angles.

A puissance de dégivrage égale, ces formes permettent de tenir des conditions givrantes plus sévères que les capteurs classiques à prise d'air de section de forme rectangulaire ; elles permettent en outre d'être conformes aux dernières évolutions des normes aéronautiques. Notamment pour des conditions givrantes identiques, la puissance de dégivrage nécessaire est moins importante de 10 à 20 % que pour les capteurs antérieurs.

On notera toutefois que des prises d'air du type de celle illustrée sur la figure 6 sont particulièrement préférées : notamment, la surface plane supérieure 1c permet d'assurer un taux de compression interne suffisant pour le bon rendement du système d'aspiration, quel que soit le débit de l'écoulement extérieur.

### Aspiration de la couche limite

Par ailleurs, dans l'exemple illustré sur la figure 5, comme sur celui des figures 6 et 7, la surface plane 1b inférieure de la prise d'air 1 porte, à la place des trous d'aspiration qui sont habituellement prévus pour les systèmes d'aspiration de couches limites, des rainures 12 qui s'étendent perpendiculairement à la direction d'écoulement du flux dans la prise d'air.

Ces rainures 12 permettent de limiter le développement de la couche limite thermique à l'intérieur de la sonde, ainsi qu'à l'intérieur du conduit 3 dans lequel est disposé l'élément sensible grâce :
- à une augmentation du rendement d'aspiration due à une section efficace plus importante ;
- à une absence de déviation des lignes de courant, lesdites rainures permettant un écoulement présentant une certaine largeur (écoulement 2D) (figure 8b) contrairement au système d'aspiration à trous (figure 8a).

Ce perfectionnement trouve tout particulièrement avantageusement application dans le cas où la sonde présente une incidence importante par rapport à la direction d'écoulement du flux (incidence supérieure à 5°). La sensibilité angulaire, système de réchauffage activé, est alors réduite de 20 à 50 %.

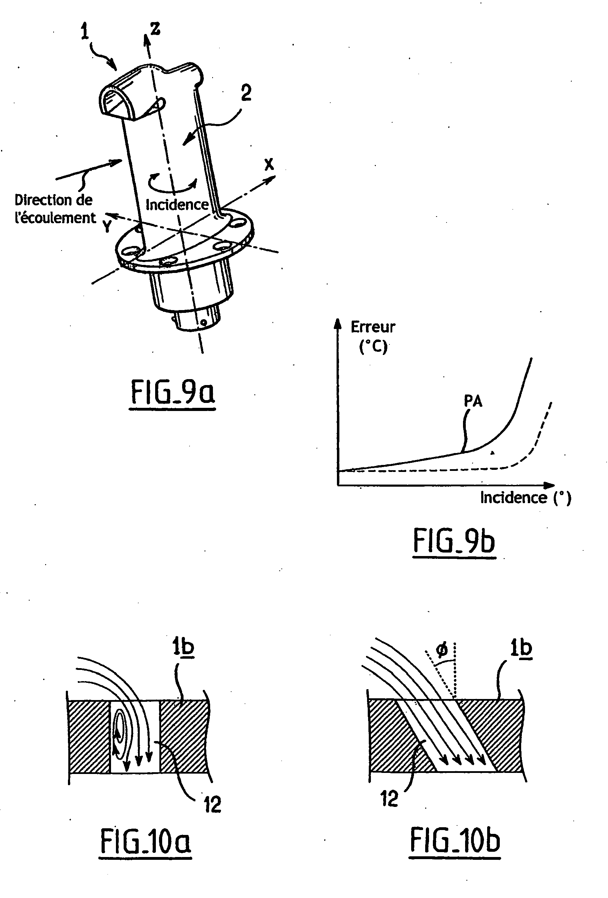

C'est ce qui est illustré sur les figures 9a et 9b, la figure 9a définissant l'incidence prise par la sonde par rapport à la direction d'écoulement (cf. double flèche qui illustre le pivotement autour de l'axe de la sonde), la figure 9b étant un graphe sur lequel on a porté des courbes montrant l'évolution de l'erreur sur la température totale d'air en fonction de l'angle d'incidence entre la direction d'écoulement et l'axe de la sonde et ce, d'une part, dans le cas d'une sonde de l'art antérieur à trous d'aspiration (courbe en trait plein) et, d'autre part, dans le cas d'une sonde munie de rainures d'aspiration (courbe en traits pointillés).

On voit qu'avec des rainures d'aspiration, le comportement angulaire est fortement amélioré, la sonde étant particulièrement insensible aux effets d'angle, l'angle de décrochage de la sonde étant en tout état de cause fortement repoussé.

On notera par ailleurs que l'utilisation de rainures permet d'éliminer les points froids présents entre les trous d'aspiration utilisés dans l'art antérieur et susceptibles de favoriser une accroche du givre.

En outre, elles sont moins susceptibles de s'obstruer dans le cas où des corps étrangers sont ingérés par la sonde (sable, poussières volcaniques,...).

On notera également que les rainures peuvent avantageusement être inclinées dans l'épaisseur de la paroi inférieure 1b. C'est ce que montrent les figures 10a et 10b, qui illustrent respectivement l'écoulement d'un fluide dans le cas d'une rainure non inclinée (figure 10a) et dans le cas d'une rainure inclinée (figure 10b).

On comprend sur ces représentations qu'une inclinaison d'un angle φ par rapport à la perpendiculaire à la paroi 1b permet un rendement d'écoulement optimisé et notamment une réduction des zones de recirculation à l'intérieur des rainures et une augmentation de la valeur de la pression d'alimentation.

L'angle φ peut par exemple être compris entre 10° et 60°. Il est par exemple autour de 45°.

Par ailleurs, ainsi que l'illustrent les figures 11a, 11b et 11c, différentes formes sont envisageables pour les rainures. Notamment, les rainures peuvent être des fentes de section rectangulaire (figure 11a) ; elles peuvent être des fentes de section à extrémités arrondies (figure 11b) ; elles peuvent être en forme de pointe de flèche (figure 11c), etc...

La figure 12 illustre, quant à elle, le cas d'une paroi présentant trois rainures 12 en flèche. La pointe des flèches 12 y est dirigée vers la zone d'éjection 5 de la sonde.

Par ailleurs, ces rainures d'aspiration 12 débouchent dans une chambre 7 qui est définie, d'une part, par la paroi 1b et, d'autre part, par la paroi 13. Cette paroi 13 inclinée permet d'augmenter la capacité d'aspiration des rainures 12 en optimisant le différentiel de pression entre l'intérieur de la sonde et les ouies définies par la forme de cette chambre 7, et ce par génération d'un tourbillon marginal sur les bords de la paroi 13. Il en résulte une diminution de l'erreur associée au système de réchauffage à bas débit.

Par ailleurs, la section d'éjection de la zone 5 (figure 15) est déterminée pour permettre la séparation inertielle des particules entrant dans la sonde et pour donner à la sonde une bonne capacité à ingérer du givre et des cristaux de glace.

### Elément sensible

Ainsi que l'illustre la figure 15, l'élément sensible 9 est, quant à lui, constitué de deux parties principales de forme cylindrique (tube céramique 21 et mandrin support 22). Ces formes permettent d'assurer un échange d'énergie optimal avec le fluide mesuré et de diminuer par conséquent l'erreur introduite par le transfert de chaleur par conduction entre la sonde et l'élément sensible. Cet effet est amplifié par l'utilisation d'une céramique isolante thermiquement pour le mandrin support.

Notamment, le fait d'utiliser des céramiques pour réaliser le support de l'élément de mesure permet une tenue mécanique et un découplage thermique améliorés.

On notera qu'une telle structure présente une tenue mécanique accrue en fatigue.

Par ailleurs, une telle structure permet de garantir un isolement électrique supérieur à ce qu'offre une technologie sur support métallique. Notamment, la céramique assure une protection contre la foudre, ce que ne permettent pas les supports métalliques.

Egalement, le support en céramique assure un découplage thermique efficace, même à faible vitesse.

L'élément sensible 21 est, quant à lui, avantageusement constitué d'un tube céramique sur lequel est bobiné le fil résistif.

Les améliorations décrites précédemment trouvent avantageusement application dans un capteur qui comporte une bride de fixation présentant une portée définissant un plan de fixation pour le capteur et dans lequel le corps profilé est incliné par rapport au plan de fixation et présente un axe longitudinal qui s'étend autrement que perpendiculairement par rapport audit plan.

Plus précisément, la sonde s'étend alors de façon à ce que l'ouverture de la prise 1 se trouve dans le flux de fluide, le mât se trouvant également dans le fluide, son plan médian principal étant parallèle à la direction d'écoulement de celui-ci, l'axe dudit mât (c'est-à-dire l'axe du conduit 3 et de l'élément sensible 9, référencé par A sur la figure 3) étant incliné par rapport à l'écoulement du flux de fluide et étant disposé avec un certain angle par rapport à une direction qui s'étendrait dans ledit plan médian perpendiculairement à l'écoulement du fluide et au plan de fixation défini par la portée 11a.

Cette inclinaison est « *vers l'arrière »,* la tête de la sonde, c'est-à-dire la prise d'air 1, étant en retrait par rapport à la partie du mât 2 qui en est la plus éloignée si l'on se réfère au sens d'écoulement du fluide.

L'angle entre l'axe A du mât 2 et la direction perpendiculaire précitée (angle α sur la figure 3) est de l'ordre de 5 à 15°.

## Revendications

1. Capteur de mesure de paramètre(s) physique(s) notamment la température totale de l'air sur un fluide comportant :
une prise de fluide (1) constituée par une tête rapportée sur un corps profilé (2),
- un conduit aménagé dans ledit corps profilé (2) pour permettre l'écoulement du fluide, ledit conduit communiquant avec ladite prise de fluide (1) par l'intermédiaire d'une zone de séparation inertielle, la tête se poursuivant au-delà de la zone de séparation inertielle par une zone d'éjection,
- une bride de fixation (11) à partir de laquelle s'étend le corps profilé (2), la bride de fixation présentant une portée (11 a) définissant un plan de fixation pour le capteur,
- un élément sensible disposé à l'intérieur dudit conduit, **caractérisé en ce que** ladite prise de fluide présente une section d'entrée qui s'étend de façon à définir une surface inclinée par rapport à la perpendiculaire au plan de fixation, cette surface inclinée définissant une surface de glissement pour d'éventuels glaçons qui viendraient en appui sur celle-ci.

2. Capteur selon la revendication 1, **caractérisé en ce que** la section d'entrée présente une inclinaison par rapport à une section orthogonale à la direction principale l'écoulement de fluide.

3. Capteur selon la revendication 1, **caractérisé en ce que** la section d'entrée définit une surface de glissement concave ou convexe.

4. Capteur selon l'une des revendications précédentes, **caractérisé en ce que**
la prise de fluide (1) présente une section intérieure définie par au moins une surface plane (1 b) qui communique avec une chambre (7) qui débouche à l'extérieur et qui constitue une chambre d'aspiration de couche limite, et **en ce que** ladite surface plane (1 b) présente à cet effet une pluralité de rainures d'aspiration (12) s'étendant transversalement par rapport à la direction générale d'écoulement du flux dans la prise de fluide.

5. Capteur selon la revendication 4, **caractérisé en ce que** les rainures s'étendent sur ladite paroi plane perpendiculairement à la direction générale d'écoulement dans le fluide.

6. Capteur selon la revendication 4, **caractérisé en ce que** les rainures s'étendent en « V » sur ladite paroi plane.

7. Capteur selon l'une des revendications 4 à 6, **caractérisé en ce que** les rainures s'étendent dans l'épaisseur de la paroi en étant inclinées vers l'aval.

8. Capteur selon l'une des revendications précédentes, **caractérisé en ce que** l'élément sensible comporte un tube céramique sur lequel est bobiné un fil résistif de mesure.

9. Capteur selon la revendication 8, **caractérisé en ce qu'**il comporte un mandrin support qui porte l'élément sensible et qui est en céramique thermiquement isolante.

10. Capteur selon l'une des revendications précédentes, **caractérisé en ce que** le corps profilé (2) est incliné par rapport au plan de fixation et présente un axe longitudinal qui s'étend autrement que perpendiculairement par rapport audit plan.

11. Capteur selon l'une des revendications précédentes, **caractérisé en ce que** l'angle entre l'axe longitudinal (A) du corps profilé (2) et la direction perpendiculaire à l'écoulement du fluide et/ou au plan de fixation est sensiblement compris entre 5 et 15°.

12. Capteur selon l'une des revendications précédentes, **caractérisé en ce que** la prise de fluide (1) présente une section intérieure définie par deux surfaces sensiblement planes (1b, 1 c) s'étendant en regard l'une de l'autre et reliées entre elles par des surfaces de forme arrondie.

## Claims

1. A sensor for measuring a physical parameter of a fluid, in particular for measuring total air temperature, the sensor comprising:
- a fluid intake (1) made of a head fitted to a streamlined body (2);
- a duct provided in said streamlined body (2) to enable fluid flow, said duct communicating with said fluid intake via an inertial separation zone, the head extending beyond the inertial separation zone by an ejection zone;
- a fixing flange (11) from which the streamlined body (2) is extending, the fixing flange presenting a bearing surface (11a) that defines a fixing plane for the sensor;
- a sensing element disposed inside said duct;
the sensor being **characterized in that** said fluid intake presents an inlet section which extends in such a manner as to define an inclined surface relative to the perpendicular to the fixing plane, said inclined surface defining a sliding surface for any pieces of ice that may come to bear thereagainst.

2. The sensor of claim 1, **characterized in that** the inlet section presents an inclination relative to a section orthogonal to the main flow direction of the fluid.

3. The sensor of claim 1, **characterized in that** the inlet section defines a sliding surface that is concave or convex.

4. The sensor of any of the preceding claims, **characterized in that**
the fluid intake (1) presents an inside section defined by at least one plane surface (1 b) which communicates with a chamber (7) that opens to the outside and that constitutes a boundary layer suction chamber;
and **in that** said plane surface (1 b) presents for this purpose a plurality of suction slots (12) extending transversely relative to the general flow direction of the stream in the fluid intake.

5. The sensor of claim 4, **characterized in that** the slots extend in said plane wall perpendicularly to the general flow direction of the fluid.

6. The sensor of claim 4, **characterized in that** the slots extend in a chevron shape in said plane wall.

7. The sensor of any one of claims 4 to 6, **characterized in that** the slots extend through the thickness of the wall so as to slope downstream.

8. The sensor of any of the preceding claims, **characterized in that** the sensing element comprises a ceramic tube having a measurement resistive wire wound thereon.

9. The sensor of claim 8, **characterized in that** it includes a support mandrel carrying the sensing element and made of a thermally insulating ceramic.

10. The sensor of any of the preceding claims, **characterized in that** the streamlined body (2) is inclined relative to the fixing plane and presents a longitudinal axis which extends other than perpendicularly relative to said plane.

11. The sensor of any of the preceding claims, **characterized in that** the angle between the longitudinal axis (A) of the streamlined body (2) and the direction perpendicular to the fluid flow and/or to the fixing plane lies substantially in the range 5° to 15°.

12. The sensor of any of the preceding claims, **characterized in that** the fluid intake (1) presents an inside section defined by two substantially plane surfaces (1b, 1 c) extending facing each other, and interconnected by surfaces of rounded shape.

## Patentansprüche

1. Sensor zur Messung eines physikalischen Parameters (physikalischer Parameter) insbesondere die totale Lufttemperatur über ein Fluid, umfassend:
einen Fluideinlass (1), der durch einen Kopf ausgebildet ist, der auf einen profilierten Körper (2) aufgesetzt ist;
ein Kanal, der in dem profilierten Körper (2) eingerichtet ist, um das Strömen des Fluids zu gestatten, wobei der Kanal in Verbindung mit dem Fluideinlass (1) steht, durch das Zwischenglied einer Zone zur Trägheitstrennung, wobei sich der Kopf jenseits der Zone zur Trägheitstrennung durch eine Ausstoßzone fortsetzt,
ein Befestigungsflansch (11), von welchem an sich der profilierte Körper (2) erstreckt, wobei der Befestigungsflansch eine Auflagefläche (11a) aufweist, die eine Befestigungsfläche für den Sensor definiert,
ein Fühlerelement, das im Inneren des Kanals angeordnet ist,
**dadurch gekennzeichnet, dass** der Fluideinlass einen Eingangsbereich darstellt, der sich so erstreckt, dass er eine geneigte Oberfläche bezüglich der Senkrechten zur Befestigungsfläche definiert, wobei diese geneigte Oberfläche eine Gleitoberfläche definiert für mögliche Eisstücke, die darauf in Auflage kommen.

2. Sensor nach Anspruch 1, **dadurch gekennzeichnet, dass** der Eingangsbereich eine Neigung bezüglich eines orthogonalen Bereichs zur Hauptrichtung des Fluidstroms aufweist.

3. Sensor nach Anspruch 1, **dadurch gekennzeichnet, dass** der Eingangsbereich eine konkave oder konvexe Gleitoberfläche definiert.

4. Sensor nach einem der vorstehenden Ansprüche, **dadurch gekennzeichnet, dass**
der Fluideinlass (1) einen inneren Bereich aufweist, der durch mindestens eine ebene Oberfläche (1b) definiert ist, welche mit einem Raum (7) in Verbindung steht, welcher nach außen mündet und welcher einen Grenzschichtansaugraum bildet, und **dadurch**, dass die ebene Oberfläche (1b) zu diesem Zweck eine Mehrzahl von Ansaugschlitzen (12) aufweist, die sich quer bezüglich der Hauptstromrichtung des Flusses in dem Fluideinlass erstrecken.

5. Sensor nach Anspruch 4, **dadurch gekennzeichnet, dass** die Schlitze sich über der ebenen Wandung senkrecht zur Hauptstromrichtung in dem Fluid erstrecken.

6. Sensor nach Anspruch 4, **dadurch gekennzeichnet, dass** die Schlitze sich V-förmig über die ebene Wandung erstrecken.

7. Sensor nach einem der Ansprüche 4 bis 6, **dadurch gekennzeichnet, dass** die Schlitze sich durch die Dicke der Wandung erstrecken und dabei nach hinten geneigt sind.

8. Sensor nach einem der vorstehenden Ansprüche, **dadurch gekennzeichnet, dass** das Fühlere Element ein Keramikrohr umfasst, auf welchen ein Widerstandsmessdraht gewickelt ist.

9. Sensor nach Anspruch 8, **dadurch gekennzeichnet, dass** er eine Trägerspindel umfasst, welche das Fühlerelement trägt und welche aus thermisch isolierender Keramik ist.

10. Sensor nach einem der vorstehenden Ansprüche, **dadurch gekennzeichnet, dass** der profilierte Körper (2) bezüglich der Befestigungsfläche geneigt ist und eine longitudinale Achse aufweist, die sich anders als senkrecht bezüglich der Fläche erstreckt.

11. Sensor nach einem der vorstehenden Ansprüche, **dadurch gekennzeichnet, dass** der Winkel zwischen der longitudinalen Achse (A) des profilierten Körpers (2) und der senkrechten Richtung zum Fluidstrom und/oder zu der Befestigungsebene im Wesentlichen zwischen 5 und 15° liegt.

12. Sensor nach einem der vorstehenden Ansprüche, **dadurch gekennzeichnet, dass** der Fluideinlass (1) einen inneren Bereich aufweist, der durch zwei im Wesentlichen ebene Oberflächen (1b, 1c) definiert ist, die sich einander gegenüberliegend erstrecken und miteinander durch Oberflächen von runder Form verbunden sind.
